# EUROPEAN PATENT APPLICATION

(11) **EP 4 749 742 A1**
(43) Date of publication of application: **27.05.2026**
(21) Application number: 25217056.8
(22) Date of filing: 19.11.2025
(51) Int. Cl.: H01M 10/0566, H01M 10/0567, H01M 10/0568, H01M 10/0569

(54) **ELECTROLYTE COMPOSITIONS AND MATERIALS FOR SAFE AND HIGH-VOLTAGE LITHIUM/SODIUM ION BATTERIES**

(30) Priority: 22.11.2024 US 202418956929
(71) Applicant: The Chinese University Of Hong Kong, Hong Kong 999077 (CN)
(72) Inventor: LU, Yi-Chun, Hong Kong (HK); ZUO, Changjian, Hong Kong (HK)
(74) Representative: WSL Patentanwälte Partnerschaft mbB

(57) **Abstract**

Electrolyte compositions and materials are provided to facilitate stable cycling of the LiNi_{0.8}Mn_{0.1}Co_{0.1}O₂ // graphite batteries under the 4.7 V conditions. The electrolyte composition includes LiPF₆, DEC and MPIE at a mole ratio of 1: 3.94: 6.11 with the 4.67% addition of FEC (denoted as s-DEC MPIE). The inherent nonflammability of the electrolyte due to the fluorinated ether boosts the safety performance of Ah-level lithium-ion pouch cells, ensuring pouch cells passing stringent nail-penetration tests and elevating the thermal runaway temperature by 20 °C in accelerating rate calorimeter tests. The electrolyte composition demonstrates good industry compatibility and greatly improves the ultra-high voltage stability and safety performance from material level to practical Ah pouch cell level.

## Description

### BACKGROUND OF THE INVENTION

Lithium ion batteries (LIBs) have revolutionized the way we utilize energy, which have already been applied to the various portable electronic, electrical vehicles (EV) and energy storage stations in our daily life^{1,2}. Recently, the demands for higher energy density of LIBs to solve the range anxiety of EV quest for higher cut-off voltage (> 4.5 V), which squeezes more Li⁺ from the cathode crystal to increase the energy density by ~20%^{3,4}. However, traditional electrolyte cannot meet the goal because continuous parasite interfacial reactions can occur when voltage is beyond 4.3 V^{5,6}. Although numerous strategies have been reported including adding additives⁷⁻⁹, cathode interfacial modifications¹⁰⁻¹³ and solvent molecular designs¹⁴⁻¹⁶, the performance beyond 4.5 V is still unsatisfactory.

With the energy density increasing, the safety performance should be the top priority because all the energy will be more easily to transform into the heat when batteries are under abuse, which will eventually ignite the organic vapor and cause thermal runaway¹⁷. To inert the organic solvent such as ethylene carbonate (EC) or diethyl carbonate (DEC), flame retardant (FR) materials were proposed to tame the flammability utilizing radical scavengers^{18,19}. Despite their notable effectiveness in flame ignition tests, practical demonstrations of Ah-level batteries that are safe under thermal and mechanical abuse conditions have rarely been reported. The challenges can be attributed to two main factors. First, the addition of flame-retardant (FR) materials often compromises interfacial stability²⁰, which can increase heat release and ultimately accelerate thermal runaway²¹. Second, there is an incompatibility between proposed electrolytes and established industry technologies, due to physical properties of the electrolyte such as viscosity and extremely high price^{22,23}.

### BRIEF SUMMARY OF THE INVENTION

Embodiments of the subject invention pertain to compositions and materials for a safe and high-voltage electrolyte for lithium/sodium ion batteries.

According to an embodiment of the subject invention, a composition of an electrolyte for lithium/sodium ion batteries is provided. The composition comprises a salt; a solvent; a fluorinated species; and an additive. A weight ratio of the salts is between 5%-20%. The salt can include lithium hexafluorophosphate (LiPF₆, CAS:21324-40-3), lithium bis(trifluoromethanesulfonyl)imide (LiTFSI, CAS: 90076-65-6), lithium bis(fluorosulfonyl)imide (LiFSI, CAS: 171611-11-3), sodium hexafluorophosphate (NaPF₆, CAS:21324-39-0), sodium bis(trifluoromethanesulfonyl)imide (NaTFSI, CAS: 91742-21-1), sodium bis(fluorosulfonyl)imide (NaFSI, CAS: 100669-96-3) or any combination thereof. Moreover, a weight ratio of the solvent is between 10%-40%. The solvent includes one or more organic liquids having carbonate or ether groups. Furthermore, a weight ratio of the fluorinated species is between 30%-80%. The fluorinated species includes one or more fluorinated ether fluorocarbon, or fluorinated ester. In addition, a weight ratio of the additive is between 0%-10%. The additive is one or more selected from the groups consisting of unsaturated carbonates, unsaturated sulfonates, silicon-based compounds, and lithium salts.

In another embodiment of the subject invention, a method for preparing an electrolyte for lithium/sodium ion batteries is provided, the method comprising dissolving a first predetermined amount of LiPF₆ in a second predetermined amount of diethyl carbonate (DEC) solvent to form a clear solution; adding a third predetermined amount of methyl perfluoroisobutyl ether (MPIE), a fourth predetermined amount of fluoroethylene carbonate (FEC), and a fifth predetermined amount of DEC to a sixth predetermined amount of the clear solution to form a mixture; and homogeneously mixing the mixture. The first predetermined amount can be 3 mmol. The second predetermined amount can be 1 ml. The third predetermined amount can be 4 g. The fourth predetermined amount can be 0.19 ml. The fifth predetermined amount can be 0.38 ml. The sixth predetermined amount can be 1 ml.

### BRIEF DESCRIPTION OF THE DRAWINGS

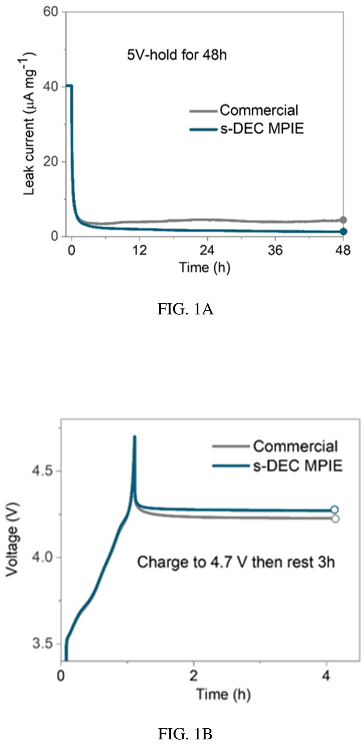

**FIGs. 1A-1B** are plot diagrams showing the oxidation stability of commercial and s-DEC MPIE electrolytes, wherein **FIG. 1A** shows the leak current of the electrolytes after charging to 5 V then rest for 48 hours and **FIG. 1B** shows the voltage profiles of charging to 4.7 V then rest 3 hours for the two electrolytes, according to an embodiment of the subject invention.

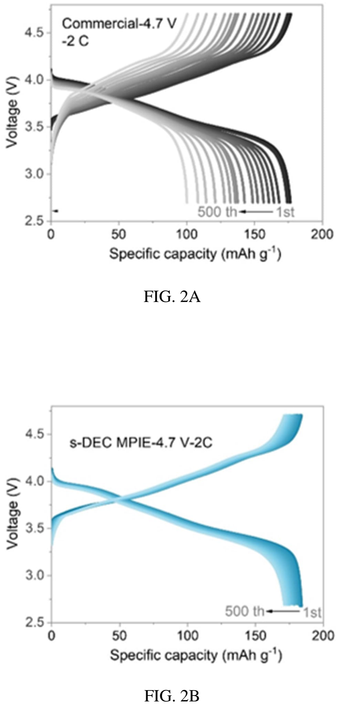

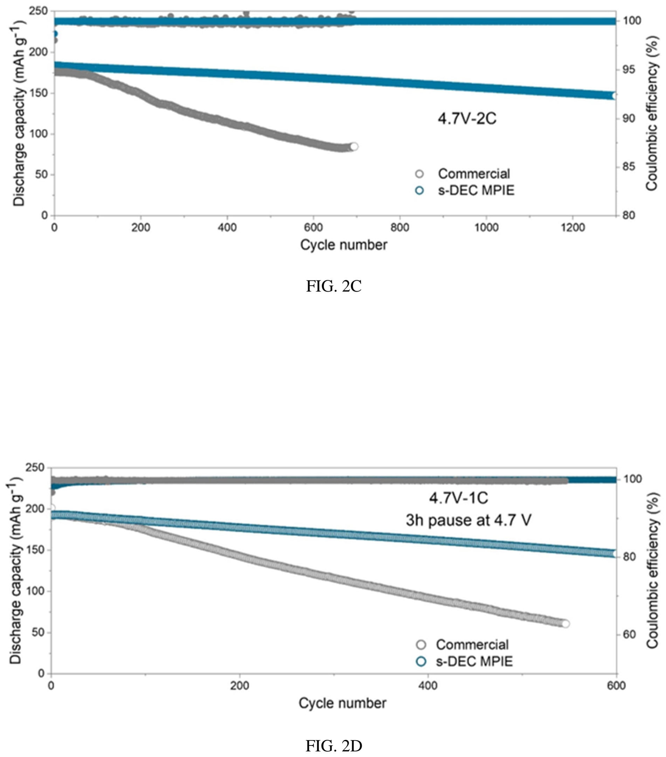

**FIGs. 2A-2D** are plot diagrams showing the cycling stability of LiNi_{0.8}Mn_{0.1}Co_{0.1}O₂ // graphite (811//Gr) cells in commercial and s-DEC MPIE electrolytes under 4.7 V, wherein **FIG. 2A** shows the charge-discharge curves of cells in commercial electrolyte from 1^{st} to 500^{th} cycles; wherein **FIG. 2B** shows the charge-discharge curves of cells in s-DEC MPIE electrolyte from 1^{st} to 500^{th} cycles; wherein **FIG. 2C** shows the cycling performance of cells in commercial and s-DEC MPIE electrolyte at 2 C rate; and wherein **FIG. 2D** shows the cycling performance of the cells in commercial and s-DEC MPIE electrolyte at 1 C under pausing procedure (charge to 4.7 V and rest for 3 hours), according to an embodiment of the subject invention.

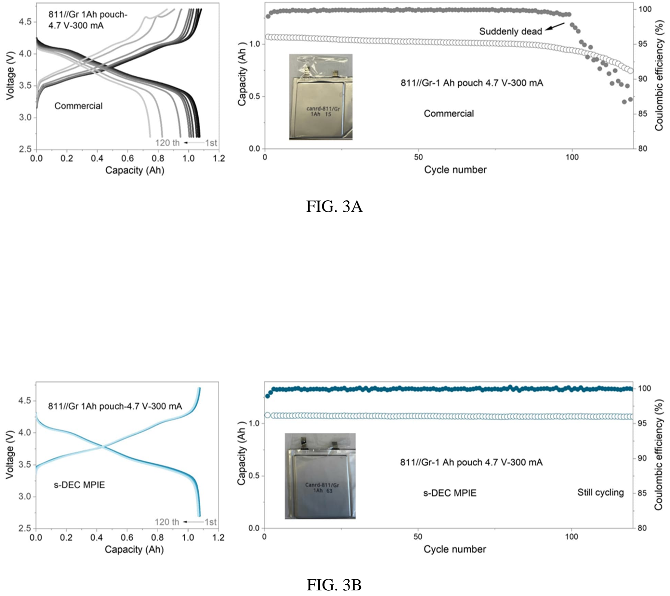

**FIGs. 3A-3B** are plot diagrams showing the cycling performance of 1 Ah pouch cell in commercial and s-DEC MPIE electrolytes, wherein **FIG. 3A** shows the 1 Ah pouch cell cycling performance in commercial electrolyte after 3 formation cycles in the voltage of 2.7-4.7 V with the current of 300 mA; and wherein **FIG. 3B** shows the 1 Ah pouch cell cycling performance in s-DEC MPIE electrolyte in the voltage of 2.7-4.7 V at 300 mA, according to an embodiment of the subject invention.

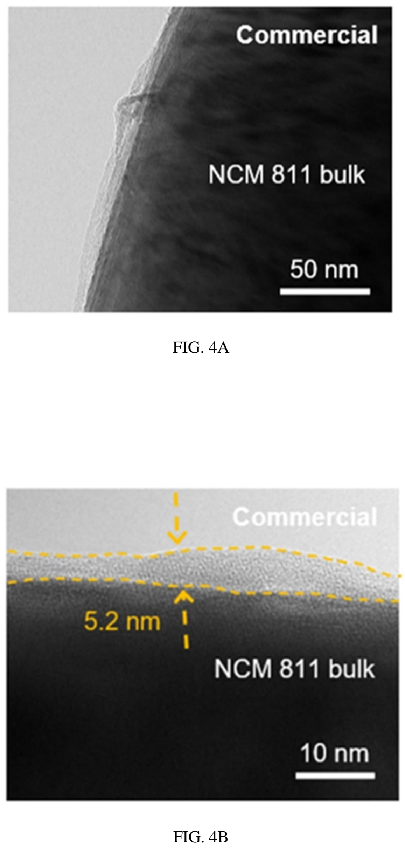

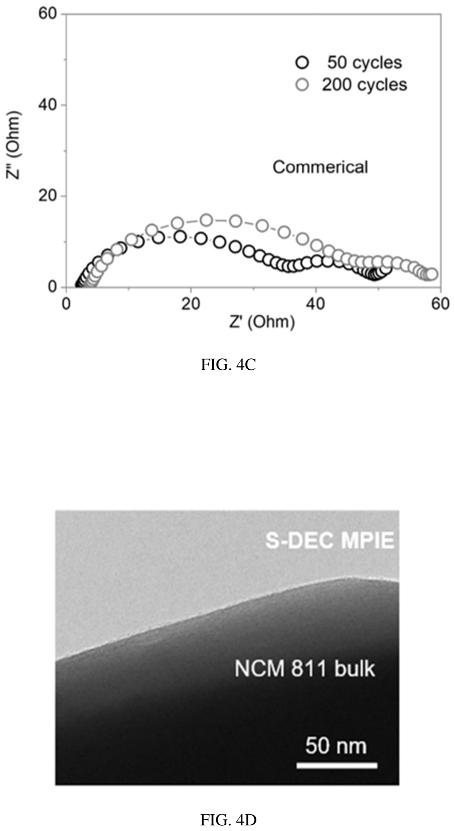

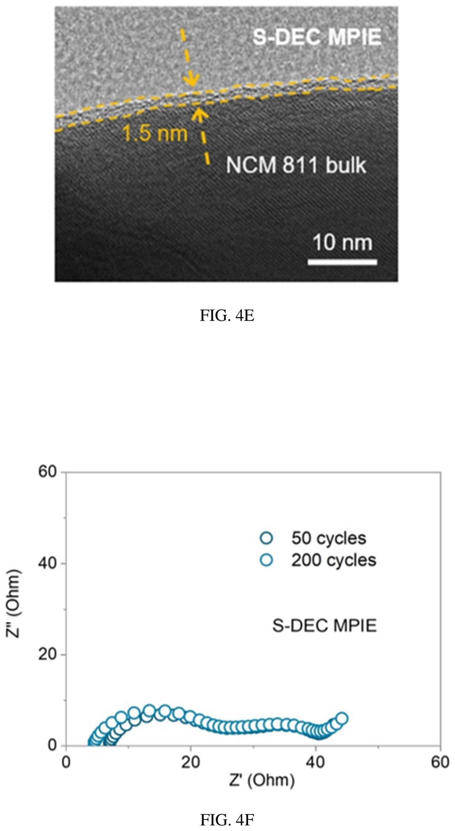

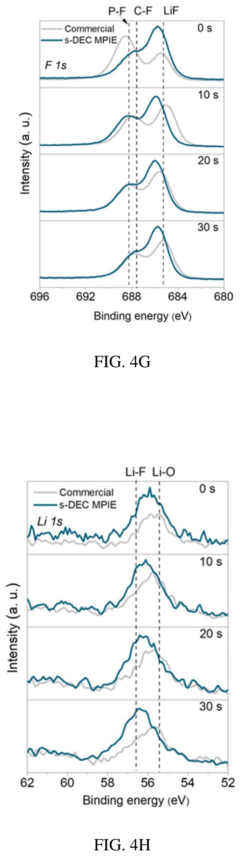

**FIGs. 4A-4J** show results of cathode interphase characterization, wherein **FIGs. 4A-4B** show the transmission electron microscope characterization of the LiNi_{0.8}Mn_{0.1}Co_{0.1}O₂ cathode after 100 cycles in commercial electrolytes in the voltage of 2.7-4.7 V; wherein **FIG. 4C** shows the electrochemical impedance spectroscopy of 811//Gr cells after 50 and 200 cycles in commercial electrolytes; wherein **FIGs. 4D-4E** show the transmission electron microscope characterization for the LiNi_{0.8}Mn_{0.1}Co_{0.1}O₂ cathode after 100 cycles in s-DEC MPIE electrolytes in the voltage of 2.7-4.7 V; wherein **FIG. 4F** shows the electrochemical impedance spectroscopy of 811//Gr cells after 50 and 200 cycles; and wherein **FIGs. 4G-4J** show X-ray photoelectron spectroscopy of F 1s, Li 1s, C 1s and O 1s orbit on the cycled cathode in commercial and s-DEC MPIE electrolytes after 100 cycles, according to an embodiment of the subject invention.

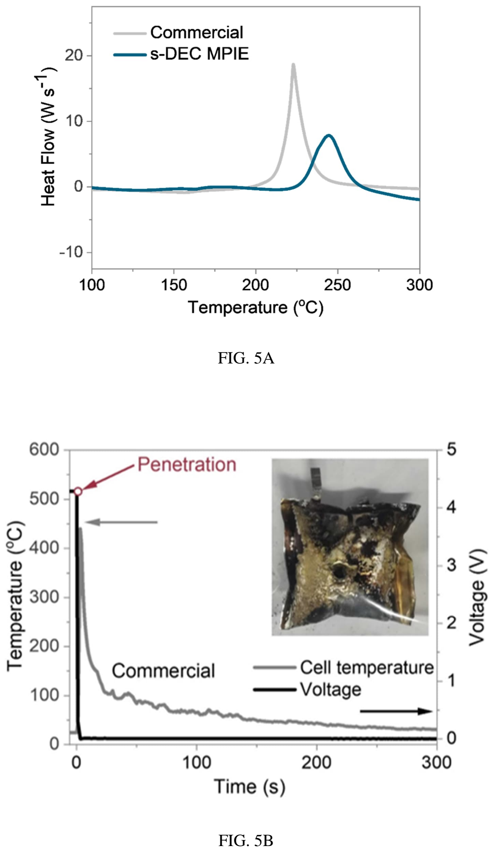

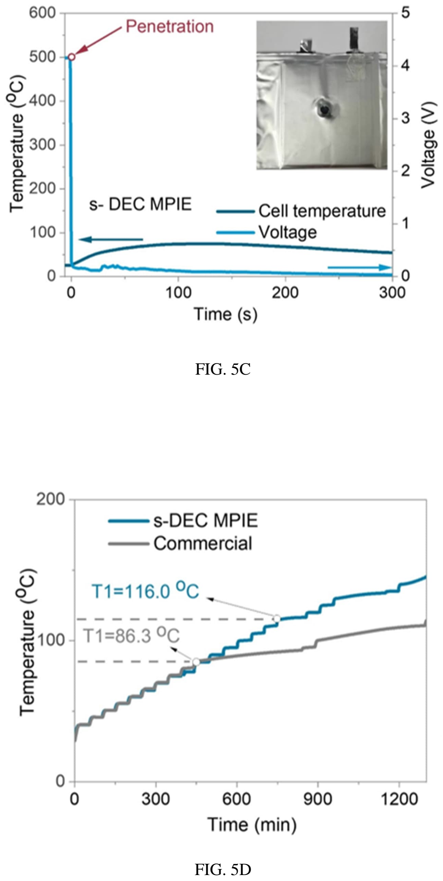

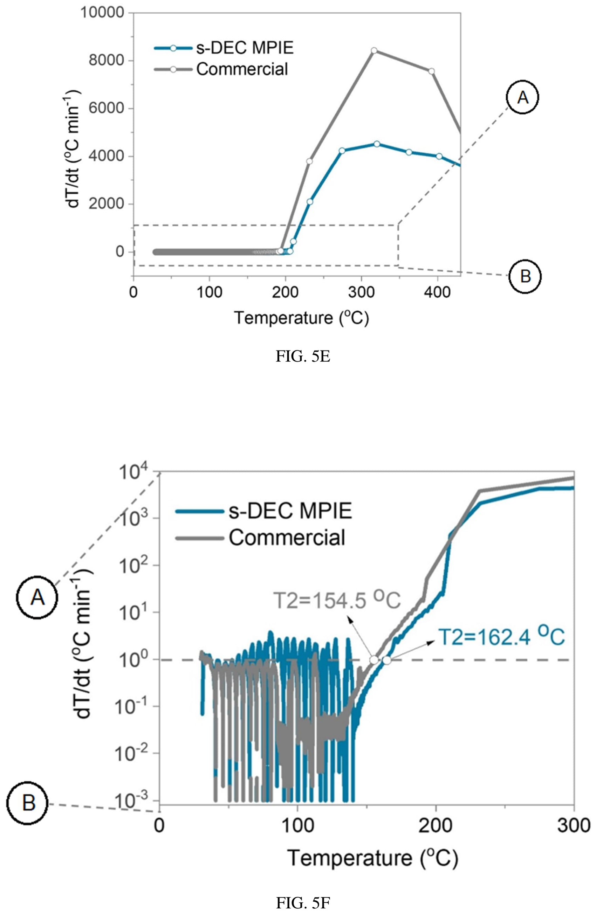

**FIGs. 5A-5F** show results of the safety demonstration tests of s-DEC MPIE electrolyte, wherein **FIG. 5A** shows the differential scanning calorimetry test for charged NCM 811 and lithiation graphite with 1 µl electrolyte in gold plated crucible at the heating rate of 5 °C s⁻¹, wherein **FIG. 5B** shows voltage and temperature profiles for nail penetrations of 1 Ah pouch cell with commercial electrolyte and inserted digital images of pouch cell after nail penetrations, wherein **FIG. 5C** shows voltage and temperature profiles for nail penetrations of 1 Ah pouch cell with s-DEC MPIE electrolyte and inserted digital images of pouch cell after nail penetration, and wherein **FIGs. 5D-5F** show the accelerating rate calorimeter tests for the 1 Ah pouch cell with commercial and s-DEC MPIE electrolyte, according to an embodiment of the subject invention.

### DETAILED DISCLOSURE OF THE INVENTION

Embodiments of the subject invention are directed to a composition of an electrolyte for lithium/sodium ion batteries and a method for preparing the electrolyte.

The terminology used herein is for the purpose of describing particular embodiments only and is not intended to be limiting of the invention. As used herein, the term "and/or" includes any and all combinations of one or more of the associated listed items. As used herein, the singular forms "a," "an," and "the" are intended to include the plural forms as well as the singular forms, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which this invention pertains. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

When the term "about" is used herein, in conjunction with a numerical value, it is understood that the value can be in a range of 90% of the value to 110% of the value, i.e. the value can be +/- 10% of the stated value. For example, "about 1 kg" means from 0.90 kg to 1.1 kg.

Electrolytes, regarded as the 'electrochemical blood', play a significant role in lithium/sodium ion batteries. However, the relatively low oxidation stability (less than 4.3 V vs. Li⁺/Li) and highly flammability of traditional electrolyte solvent (carbonates) hinders the energy density and safety performance.

To make electrolyte compatible with ultra-high voltage and practically safe in the real batteries, an electrolyte composition including LiPF₆ salt, DEC solvent and methyl perfluoroisobutyl ether (MPIE) with fluoroethylene carbonate (FEC) additives is provided. The electrolyte demonstrates ultra-high oxidation resistance and support stable cycling of LiNi_{0.8}Mn_{0.1}Co_{0.1}O₂ // graphite cells under 4.7 V conditions. In addition, owning to heavy addition of flammability inert MPIE, this electrolyte enables 1Ah pouch cells to successfully pass nail penetration tests without getting fire and significantly lower the thermal runaway temperature by 20 °C in accelerating rate calorimeter (ARC) tests. The low-cost electrolyte composition exhibits perfect industry compatibility and demonstrates great commercialization potentials for ultra-high voltage and practically safe batteries.

### MATERIALS AND METHODS

**Materials:** Lithium hexafluorophosphate (LiPF₆, 98%), diethyl carbonate (DEC, 98%), ethylene carbonate (EC, 98%) were purchased from TCI. Fluoroethylene carbonate (FEC,99%) was purchased from Canrd. Methyl perfluoroisobutyl ether (MPIE) was purchased from ShangFluoro company. Salts were used as received and all the solvents were dried by 4 Å molecular sieves for at least 4 days before use.

**Electrode and dry pouch cell:** the NCM 811 cathode (8.3 mg cm⁻²) and graphite anode (5.8 mg cm⁻²) were purchased from Canrd. These electrodes were pouched to 12 mm and 13 mm diameter disks, which were ready for use after drying in the vacuum oven overnight. The about 1 Ah dry NCM811 // Gr pouch cells were purchased from Canrd and LiFun New Energy company and the loading for NCM811 cathode is 13-15 mg cm⁻², and the size is about 51 mm * 66 mm.

**Electrolyte preparation:** to prepare s-DEC MPIE electrolyte, 3 mmol LiPF₆ was first dissolved in 1 ml DEC solvents to from clear solution. 4 g MPIE, 0.19 ml FEC and 0.38 ml DEC was added to 1 ml solution. The s-DEC MPIE electrolyte was made by mixing all the components homogeneously. The commercial electrolyte was made by dissolving the LiPF₆ into the mixture of EC and DEC (3: 7 by weight) to get the 1 M LiPF₆ in EC DEC.

**Electrochemical characterizations:** CR2032 coin cells were assembled in the glovebox, where the oxygen and moisture concentration are below 0.1 ppm. 19 mm celgard 2500 separator was sandwiched by NCM 811 cathode and graphite anode. 40 µl electrolyte was added to ensure the wettability of the separator. The charge-discharge were performed by cycling at 0.2 C for 3 cycles, 0.5 C for 5 cycles, 1 C for 5 cycles, then 2 C for subsequent cycles at the voltage of 2.7-4.7 V, where 1 C equals to 200 mA g⁻¹. For pausing procedures, the cells were charged to 4.7 V then rest for 3 hours before discharge at 1 C rate. For pouch cell fabrication, 3.8 g Ah⁻¹ electrolyte was first injected to dry pouch cell, then the pouch cell was sealed and rest overnight. The pouch cell was vacuum sealed and cycled under the pressure of stainless pouch cell fixtures. For commercial electrolyte, the pouch cell was first charged and discharged at 200 mA in the voltage range of 2.7-4.5 V for 3 formation cycles and the pouch cell was ready for subsequent long-term cycling after degassing and vacuum sealing. The leak current tests were carried out by first charge and discharge at 0.2 C between 2.7-4.7 V for 1 cycle followed by charging to 5 V and holding for 48 h. The EIS tests were conducted with the frequency of 200 kHz to 0.1 Hz. All the electrochemical measurements were carried out on NEWARE battery testing systems (NEWARE Technology Limited) and the VMP3 electrochemical testing unit (Bio-Logic, France).

**Material characterizations:** XPS was conducted on the Thermo Scientific K-Alpha+ utilizing the Al Kα radiation. The cycled cathode samples were sputtered by Ar⁺ for 30 seconds and the XPS data were collected every 10 seconds. The obtained XPS was calibrated by C 1s of 284.8 eV. The morphology of cycled cathode samples was investigated by high-resolution transmission electron microscopy (JEM-3200FS, JEOL). DSC tests were carried out in DSC200F3 with heating rate of 10 K min⁻¹ from 25 °C to 400 °C.

**Safety characterizations:** Nail penetration experiments were conducted by having a 5 mm diameter nail (nail angle: 30 °) puncturing the fully charged pouch cell (charged to 4.5 V after one cycle at 0.2 C) at a moving speed of 20 mm s⁻¹. Two thermocouples were fixed on the top and bottom of the pouch cell near the position of puncturing to record the temperature changes. The ARC tests were carried out in a heat-wait-search mode with temperature increasing step of 5 °C and waiting time of 30 minutes.

### Results

The electrolyte composition comprises LiPF₆, DEC and MPIE at the mole ratio of 1: 3.94: 6.11 with the 4.67% addition of FEC (denoted as s-DEC MPIE). The control group was a commercial electrolyte (1M LiPF₆ in EC: DEC= 3: 7 by wt.). To compare the high voltage stability, the leak current and self-discharge tests for both groups were performed in LiNi_{0.8}Mn_{0.1}Co_{0.1}O₂ // graphite (811//Gr) coin cells as shown in FIGs. 1A-1B. After charging to 5 V and then hold at that voltage for 48 hours, the leak current of the cell in commercial electrolyte was measured to be 4.2 µA mg⁻¹ while the measurement for the s-DEC MPIE was 1.3 µA mg⁻¹ as shown in FIG. 1A. The self-discharge test also showed significant difference voltage after charging to 4.7 V then resting 3 hours. The terminal voltage of cell in s-DEC MPIE is 50 mV higher than that in commercial electrolyte as shown in FIG. 1B. These results indicate a reduction in parasitic reactions at the cathode interface and demonstrate significantly higher oxidation resistance of the s-DEC MPIE compared to the commercial electrolytes.

Cycling performance tests of LiNi_{0.8}Mn_{0.1}Co_{0.1}O₂ // graphite cells utilizing the commercial and s-DEC MPIE electrolyte were conducted to further evaluate the oxidation stability of these two electrolytes as shown in FIGs. 2A-2D. Significant degradation under 4.7 V can be detected based on the charge-discharge curve when utilizing commercial electrolytes as shown in FIG. 2A, while negligible decay and polarization can be noticed when changing the commercial electrolyte to the s-DEC MPIE electrolyte as shown in FIG. 2B, demonstrating the great improvement of anti-oxidation ability of s-DEC MPIE electrolyte and the vital role of oxidation resistant electrolyte for the batteries. Similar results can be obtained from FIG. 2C. The cells in s-DEC MPIE exhibited excellent cycling stability of 1289 cycles before getting to 80% of their initial capacity, higher than the cell utilizing the commercial electrolyte with 384 cycles. To mimic the practically applications of lithium ion batteries, the cells were exposed to fully charged state for 3 hours when cycling to accelerate their degradations²⁴. FIG. 2D shows that cells with commercial electrolyte fail to withstand 182 cycles, whereas cells with s-DEC MPIE demonstrate stable performance over 500 cycles, achieving a high-voltage calendar life of 2,500 hours.

Further, 1 Ah commercially available dry pouch cells without electrolyte injection were collected to demonstrate the industry compatibility and commercialization potential of s-DEC MPIE electrolyte. After injection of 3.8 g Ah⁻¹ electrolytes and sealing, the pouch cells in commercial electrolyte were first charged and discharged for 3 cycles for formation. Then the formation gas was vacuumed and the pouch cells were resealed for further cycling. Pouch cell utilized commercial electrolytes shows noticeable decay before 100 cycles and abruptly deterioration with coulombic efficiency rapidly declining after 100 cycles as shown in FIG. 3A, which may be attributed to the low oxidation stability of commercial electrolyte and parasite reaction gas accumulating inside of pouch cells^{25,26}. For the pouch cells in the s-DEC MPIE electrolyte as shown in FIG. 3B, directly cycled without formation process, negligible change can be detected in the charge-discharge curves from 1^{st} to 120^{th} cycle, demonstrating perfect capacity retention and high voltage stability.

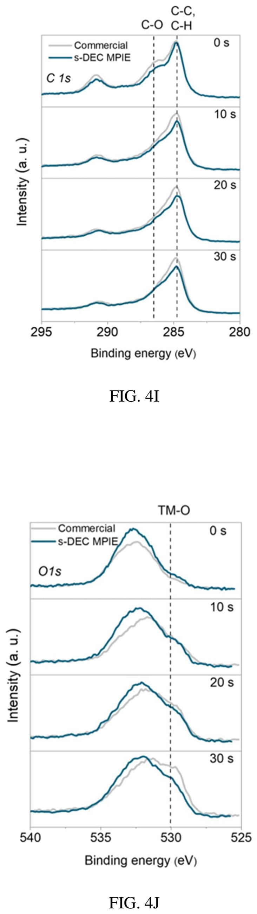

To further demonstrate the interphase stability in s-DEC MPIE electrolytes, transmission electron microscope (TEM) was employed. After 100 cycles in commercial electrolytes, uneven and thick cathode electrolyte interphase (CEI) around 5.2 nm can be clearly detected from the TEM as shown in FIGs. 4A-4B, demonstrating severe parasite reactions occurring during high voltage cycling. Thick interphase layer can block the lithium-ion transport channels, leading to high resistance and rapid deteriorations. While for the TEM images of cathode after 100 cycles in s-DEC MPIE electrolytes, the CEI around 1.5 nm was homogeneously covered on the cathode, indicating remarkable protection and isolation between the cathode and electrolytes as shown in FIGs. 4D-4F. The CEI evolution can also be evaluated by the first semicircle of electrochemical impedance spectroscopy (EIS) as shown in FIGs. 4C and 4F.²⁷⁻²⁹ The resistance of CEI layer (R_{SEI}) of the cathode after 200 cycles in commercial electrolytes gets much higher than that after 50 cycles, showing that the CEI layer is gradually getting thick. However, the R_{SEI} of cells in s-DEC MPIE electrolytes stays nearly unchanged between 50 to 200 cycles, demonstrating distinguished interphase stability and perfect anti-oxidation ability of s-DEC MPIE electrolytes. X-ray photoelectron spectroscopy (XPS) was carried out to study the interphase components within the CEI layer and the XPS was collected every 10 second during the Ar⁺ sputtering. Compared with the cathode cycled in commercial electrolyte, the surface of the cathode cycled in s-DEC MPIE electrolyte shows more LiF signals (F 1s at 685.0 eV and Li 1s at 56.4 eV)^{30,31} and less organic components signal C-O (C 1s at 286.5 eV)³² as shown in FIGs. 4G, 4H, and 4I. More LiF and less organic components derived from s-DEC MPIE electrolytes in CEI layer can greatly improve the electron isolation properties to boost oxidation stability, owning to the wide band gap of LiF (13.6 eV)³³. TM-O signals (O 1s at 530.0 eV) ³⁴ were noticeable on the cathode surface cycled in commercial electrolyte after Ar⁺ sputtering for 30 s as shown in FIG. 4J. This indicates initial reactions between the commercial electrolyte and the cathode surface, leading to the burial of transition metal species within the CEI layer."

The safety performance of s-DEC MPIE electrolyte was well demonstrated from materials level to practical Ah pouch cell level. The differential scanning calorimetry (DSC) test is utilized to evaluate the overall heat release. Charged NCM cathode, separator with electrolyte, and charged graphite were sealed as cell coin cell type in gold plated crucible and heated at rate of 10 °C min⁻¹. The DSC test with commercial electrolyte shows a sharp exothermic peak at 220 °C as shown in FIG. 5A, indicating reaction tendency of unstable interphase in commercial electrolyte. While the heat release in s-DEC MPIE electrolyte was 20 °C delayed with much slower exothermic rate as shown in FIG. 5B, further proving the anti-oxidation ability of this electrolyte and much more stable derived LiF contained interphase. Nail penetration tests for charged 1 Ah 811//Gr pouch cells were conducted to study the practical safety performance under mechanical abuse conditions. The pouch cell with commercial electrolyte burst into fire in 3 seconds after the nail penetrating the cell with temperature ramping to 450 °C and the pouch cell was severe torched as shown in FIG. 5A. While the pouch cell with s-DEC MPIE electrolyte stayed intact after nail penetration with temperature slowly increasing to 80 °C, then dropping to the room temperature as shown in FIG. 5B. Thermal abuse of charged 1 Ah pouch cell was studied using the accelerating rate calorimeter (ARC) test. The onset temperature T₁ and thermal runaway temperatures T₂ were used to describe the thermal behavior of the batteries^{17,35}. The T₁ of pouch cell with s-DEC MPIE electrolytes located at 116 °C, around 20 °C higher than the commercial counterpart as shown in FIG. 5D, showing that the elimination of EC or LiFSI reductive components can significantly elevate the onset temperature in real battery systems. In addition, the T₂ of pouch cell with s-DEC MPIE electrolyte, which is the cathode oxygen releasing and reacting temperature, was 8 °C higher than the commercial one as shown in FIG. 5D, further proving the effective interphase on the cathode and elevated oxidation stability of s-DEC MPIE electrolytes. The temperature increasing rate was also greatly decreased utilizing s-DEC MPIE electrolyte as shown in FIG. 5E, which is attributed to the heavy addition of flame radical scavenger contained MPIE. Therefore, the s-DEC MPIE electrolyte exhibits excellent safety performance, from the material level up to the practical Ah pouch cell level.

According to the embodiments of the subject invention, the s-DEC MPIE electrolyte shows great improvements on oxidation stability compared with commercial electrolyte, supporting extremely stable cycling performance of NCM811 // Gr cells under 4.7 V. Moreover, the electrolyte of the subject invention shows distinguishable safety property from material level to Ah-pouch cell level, ensuring the Ah-pouch cell passing the nail-penetration tests and elevating the thermal runaway temperature by 20 °C in ARC tests compared with commercial electrolytes. The s-DEC MPIE electrolyte also exhibits good industry compatibility in terms of physical properties and cost, possessing great up-scaling potentials for commercialization of both lithium/sodium ion batteries.

Embodiment 1. A composition of an electrolyte for lithium/sodium ion batteries, the composition comprising:
at least one salt;
at least one solvent;
at least one fluorinated species; and
optionally one or more additives.

Embodiment 2. The composition according to embodiment 1, wherein a weight percent of the salts is between 5%-20%.

Embodiment 3. The composition according to embodiment 1, wherein the salts include: lithium hexafluorophosphate (LiPF₆, CAS:21324-40-3), lithium bis(trifluoromethanesulfonyl)imide (LiTFSI, CAS: 90076-65-6), lithium bis(fluorosulfonyl)imide (LiFSI, CAS: 171611-11-3), sodium hexafluorophosphate (NaPF₆, CAS:21324-39-0), sodium bis(trifluoromethanesulfonyl)imide (NaTFSI, CAS: 91742-21-1) and sodium bis(fluorosulfonyl)imide (NaFSI, CAS: 100669-96-3).

Embodiment 4. The composition according to embodiment 1, wherein a weight percent of the solvents is between 10%-40%.

Embodiment 5. The composition according to embodiment 1, wherein the solvent includes one or more organic liquids having carbonate or ether groups.

Embodiment 6. The composition according to embodiment 5, wherein the carbonate or ether groups include but not limited to:

### Carbonates:

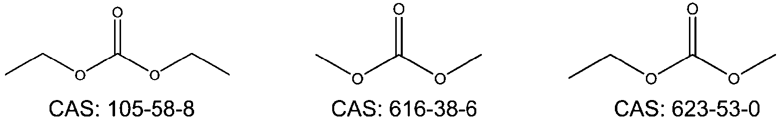

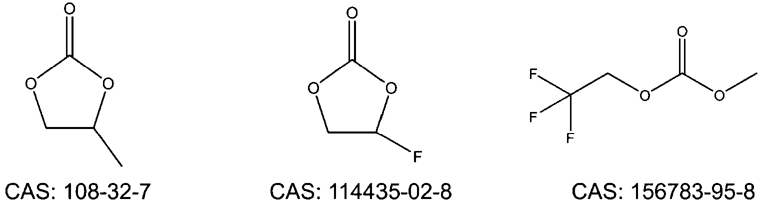

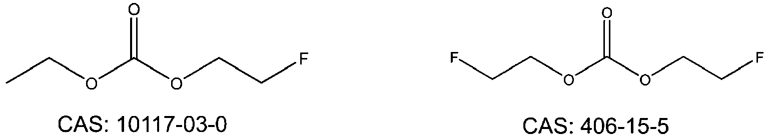

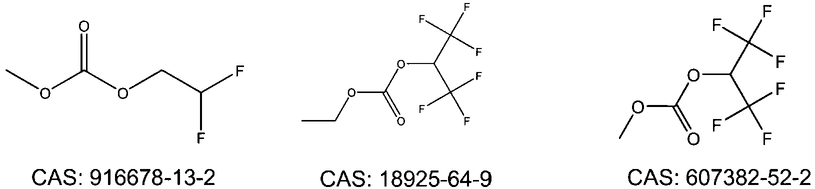

### Ethers:

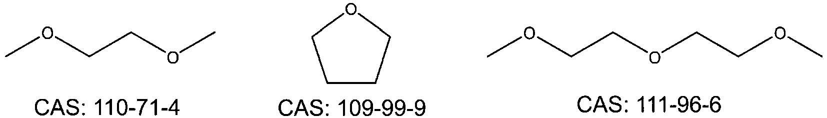

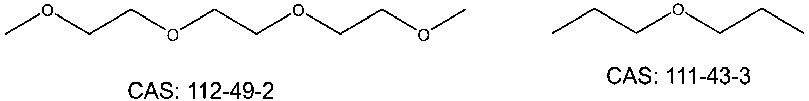

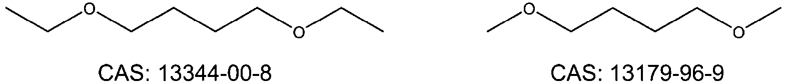

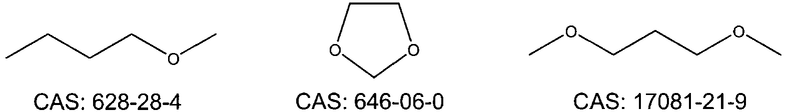

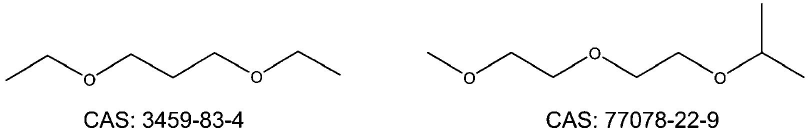

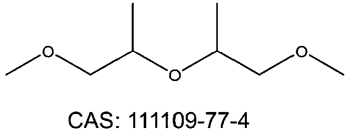

Embodiment 7. The composition according to embodiment 1, wherein a weight percentage of the fluorinated species is between 30%-80%.

Embodiment 8. The composition according to embodiment 1, wherein the fluorinated species include one or more fluorinated ether, fluorocarbon, or fluorinated ester.

Embodiment 9. The composition according to embodiment 8, wherein the one or more fluorinated ether, fluorocarbon or fluorinated ester include but not limited to:

### Fluorinated ethers:

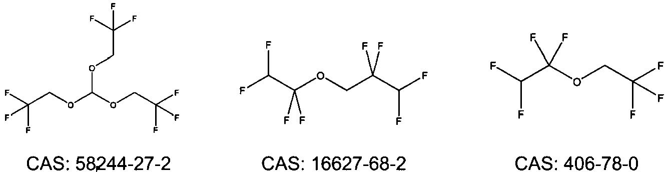

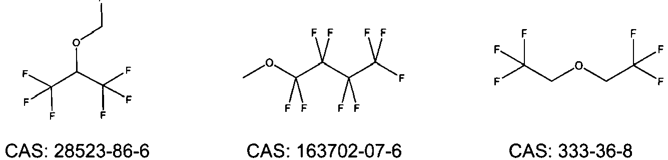

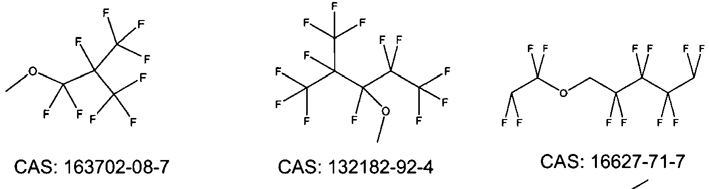

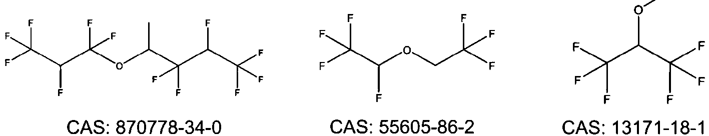

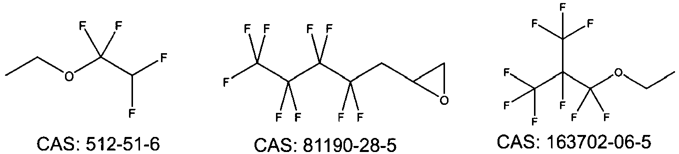

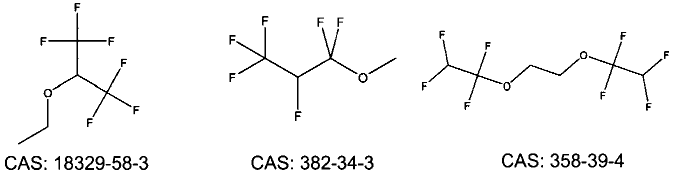

### Fluorinated carbons/esters:

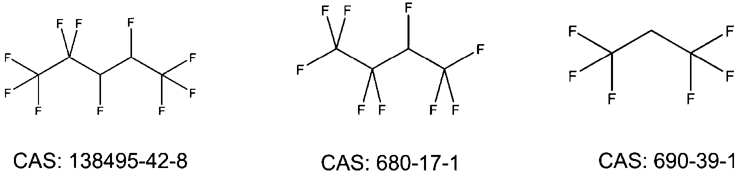

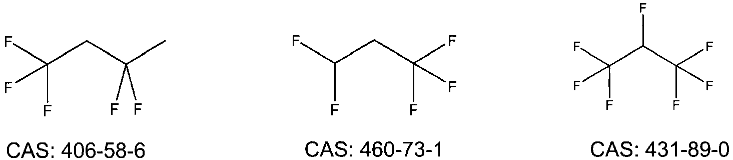

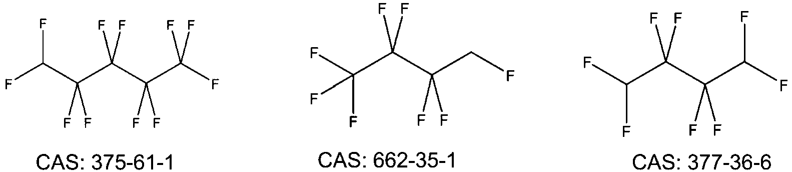

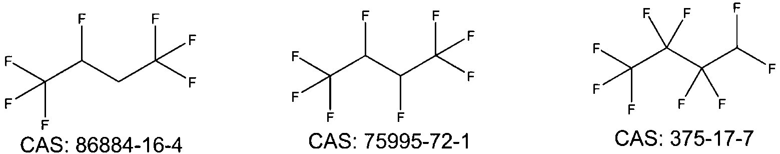

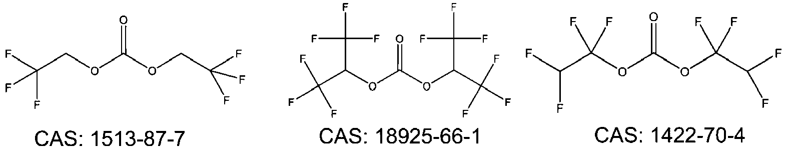

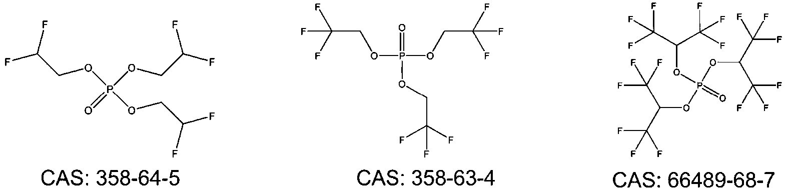

Embodiment 10. The composition according to embodiment 1, wherein a weight percent of the additive is less than or equal to10%.

Embodiment 11. The composition according to embodiment 1, wherein the one or more additives is selected from unsaturated carbonates, unsaturated sulfonates, silicon-based compounds or lithium salts.

Embodiment 12. The composition according to embodiment 11, wherein the one or more unsaturated carbonates, unsaturated sulfonates, silicon-based compounds or lithium salts include but not limited to:

### Additives:

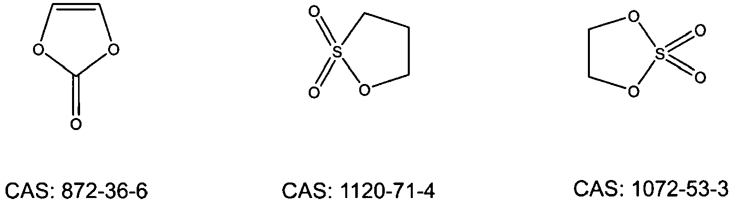

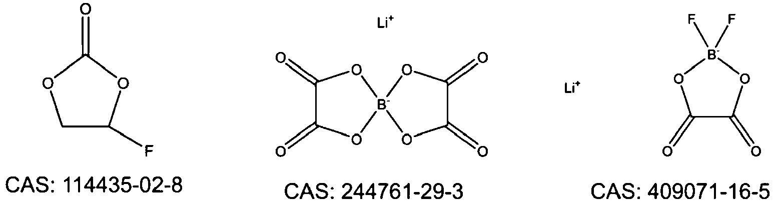

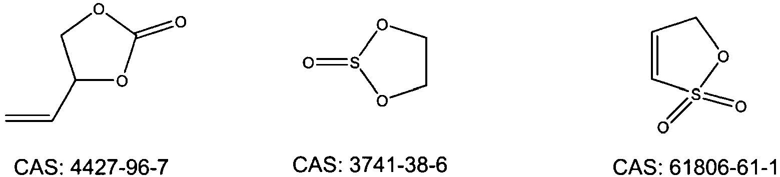

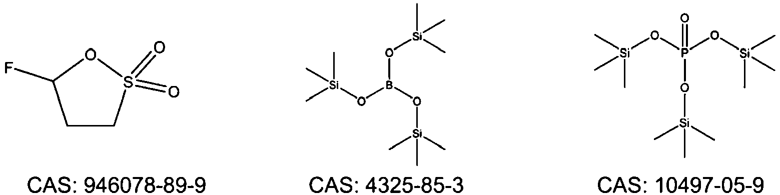

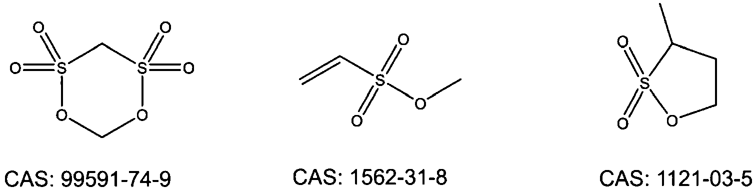

Embodiment 13. A method for preparing an electrolyte for lithium/sodium ion batteries, the method comprising:
dissolving a first predetermined amount of LiPF₆ in a second predetermined amount of DEC solvents to from a clear solution;
adding a third predetermined amount of MPIE, a fourth predetermined amount of FEC, and a fifth predetermined amount of DEC to a sixth predetermined amount of the clear solution to form a mixture; and
homogeneously mixing the mixture.

Embodiment 14. The method of embodiment 13, wherein the first predetermined amount is 3 mmol.

Embodiment 15. The method of embodiment 13, wherein the second predetermined amount is 1 ml.

Embodiment 16. The method of embodiment 13, wherein the third predetermined amount is 4 g.

Embodiment 17. The method of embodiment 13, wherein the fourth predetermined amount is 0.19 ml.

Embodiment 18. The method of embodiment 13, wherein the fifth predetermined amount is 0.38 ml.

Embodiment 19. The method of embodiment 13, wherein the sixth predetermined amount is 1 ml.

All patents, patent applications, provisional applications, and publications referred to or cited herein are incorporated by reference in their entirety, including all figures and tables, to the extent they are not inconsistent with the explicit teachings of this specification.

It should be understood that the examples and embodiments described herein are for illustrative purposes only and that various modifications or changes in light thereof will be suggested to persons skilled in the art and are to be included within the spirit and purview of this application and the scope of the appended claims. In addition, any elements or limitations of any invention or embodiment thereof disclosed herein can be combined with any and/or all other elements or limitations (individually or in any combination) or any other invention or embodiment thereof disclosed herein, and all such combinations are contemplated with the scope of the invention without limitation thereto.

### REFERENCES

1. Armand, M. & Tarascon, J.-M. Building better batteries. Nature 451, 652-657 (2008).
2. Winter, M., Barnett, B. & Xu, K. Before Li Ion Batteries. Chem. Rev. 118, 11433-11456 (2018).
3. Wang, L., Liu, T., Wu, T. & Lu, J. Strain-retardant coherent perovskite phase stabilized Ni-rich cathode. Nature 611, 61-67 (2022).
4. Zhang, R. et al. Compositionally complex doping for zero-strain zero-cobalt layered cathodes. Nature 610, 67-73 (2022).
5. Wan, G. et al. Solvent-mediated oxide hydrogenation in layered cathodes. Science 385, 1230-1236 (2024).
6. Xiao, J. et al. Assessing cathode-electrolyte interphases in batteries. Nat Energy 1-11 (2024) doi:10.1038/s41560-024-01639-y.
7. Song, W. et al. Lithium Difluoro(dioxalato) Phosphate as an Electrolyte Additive for NMC811/Graphite Li-ion Pouch Cells. J. Electrochem. Soc. 169, 110513 (2022).
8. Azam, S. et al. Performance of a Novel In-Situ Converted Additive for High Voltage Li-ion Pouch Cells. J. Electrochem. Soc. 169, 100552 (2022).
9. Eldesoky, A., Louli, A. J., Benson, A. & Dahn, J. R. Cycling Performance of NMC811 Anode-Free Pouch Cells with 65 Different Electrolyte Formulations. J. Electrochem. Soc. 168, 120508 (2021).
10. Wang, H. et al. Regulating interfacial structure enables high-voltage dilute ether electrolytes. Cell Reports Physical Science 3, (2022).
11. Dai, Z., Li, Z., Chen, R., Wu, F. & Li, L. Defective oxygen inert phase stabilized high-voltage nickel-rich cathode for high-energy lithium-ion batteries. Nat Commun 14, 8087 (2023).
12. Zhang, F. et al. Surface regulation enables high stability of single-crystal lithium-ion cathodes at high voltage. Nat Commun 11, 3050 (2020).
13. Liu, Q. et al. A fluorinated cation introduces new interphasial chemistries to enable high-voltage lithium metal batteries. Nat Commun 14, 3678 (2023).
14. Zhang, G. et al. A monofluoride ether-based electrolyte solution for fast-charging and low-temperature non-aqueous lithium metal batteries. Nat Commun 14, 1081 (2023).
15. Xu, J. et al. Electrolyte design for Li-ion batteries under extreme operating conditions. Nature 614, 694-700 (2023).
16. Yu, Z. et al. Rational solvent molecule tuning for high-performance lithium metal battery electrolytes. Nat Energy 7, 94-106 (2022).
17. Feng, X. et al. Thermal runaway mechanism of lithium ion battery for electric vehicles: A review. Energy Storage Materials 10, 246-267 (2018).
18. Zuo, C., Dong, D., Wang, H., Sun, Y. & Lu, Y.-C. Bromide-based nonflammable electrolyte for safe and long-life sodium metal batteries. Energy Environ. Sci. (2024) doi:10.1039/D3EE03332E.
19. Jia, H. et al. Is Nonflammability of Electrolyte Overrated in the Overall Safety Performance of Lithium Ion Batteries? A Sobering Revelation from a Completely Nonflammable Electrolyte. Advanced Energy Materials 13, 2203144 (2023).
20. Wang, X., Yasukawa, E. & Kasuya, S. Nonflammable Trimethyl Phosphate Solvent-Containing Electrolytes for Lithium-Ion Batteries: I. Fundamental Properties. J. Electrochem. Soc. 148, A1058 (2001).
21. Hou, J. et al. Thermal runaway of Lithium-ion batteries employing LiN(SO2F)2-based concentrated electrolytes. Nat Commun 11, 5100 (2020).
22. Wang, J. et al. Fire-extinguishing organic electrolytes for safe batteries. Nat Energy 3, 22-29 (2017).
23. Zheng, Q. et al. A cyclic phosphate-based battery electrolyte for high voltage and safe operation. Nat Energy 5, 291-298 (2020).
24. Sun, H. H., Pollard, T. P., Borodin, O., Xu, K. & Allen, J. L. Degradation of High Nickel Li-Ion Cathode Materials Induced by Exposure to Fully-Charged State and Its Mitigation. Advanced Energy Materials 13, 2204360 (2023).
25. Jung, R., Metzger, M., Maglia, F., Stinner, C. & Gasteiger, H. A. Oxygen Release and Its Effect on the Cycling Stability of LiNixMnyCozO2 (NMC) Cathode Materials for Li-Ion Batteries. J. Electrochem. Soc. 164, A1361 (2017).
26. Liu, P. et al. Revealing Lithium Battery Gas Generation for Safer Practical Applications. Advanced Functional Materials 32, 2208586 (2022).
27. EIS study on the formation of solid electrolyte interface in Li-ion battery. Electrochimica Acta 51, 1636-1640 (2006).
28. Electrochemical impedance study on the low temperature of Li-ion batteries. Electrochimica Acta 49, 1057-1061 (2004).
29. Yan, C. et al. Regulating the Inner Helmholtz Plane for Stable Solid Electrolyte Interphase on Lithium Metal Anodes. J. Am. Chem. Soc. 141, 9422-9429 (2019).
30. Cui, Z. et al. Molecular anchoring of free solvents for high-voltage and high-safety lithium metal batteries. Nat Commun 15, 2033 (2024).
31. Greczynski, G., Fahlman, M. & Salaneck, W. R. An experimental study of poly(9,9-dioctyl-fluorene) and its interfaces with Li, Al, and LiF. The Journal of Chemical Physics 113, 2407-2412 (2000).
32. Su, L. et al. Uncovering the Solvation Structure of LiPF6-Based Localized Saturated Electrolytes and Their Effect on LiNiO2-Based Lithium-Metal Batteries. Advanced Energy Materials 12, 2201911 (2022).
33. Richards, W. D., Miara, L. J., Wang, Y., Kim, J. C. & Ceder, G. Interface Stability in Solid-State Batteries. Chem. Mater. 28, 266-273 (2016).
34. Ren, X. et al. Enabling High-Voltage Lithium-Metal Batteries under Practical Conditions. Joule 3, 1662-1676 (2019).
35. Liu, X. et al. Thermal Runaway of Lithium-Ion Batteries without Internal Short Circuit. Joule 2, 2047-2064 (2018).

## Claims

1. A composition of an electrolyte for lithium/sodium ion batteries, the composition comprising:
at least one salt;
at least one solvent;
at least one fluorinated species; and
optionally one or more additives.

2. The composition according to claim 1, wherein a weight percent of the salt is between 5%-20%.

3. The composition according to claim 1, wherein the salt is one or more selected from: lithium hexafluorophosphate (LiPF₆, CAS:21324-40-3), lithium bis(trifluoromethanesulfonyl)imide (LiTFSI, CAS: 90076-65-6), lithium bis(fluorosulfonyl)imide (LiFSI, CAS: 171611-11-3), sodium hexafluorophosphate (NaPF₆, CAS:21324-39-0), sodium bis(trifluoromethanesulfonyl)imide (NaTFSI, CAS: 91742-21-1), and sodium bis(fluorosulfonyl)imide (NaFSI, CAS: 100669-96-3).

4. The composition according to claim 1, wherein a weight ratio of the solvent is between 10%-40%.

5. The composition according to claim 1, wherein the solvent includes one or more organic liquids having a carbonate or an ether group.

6. The composition according to claim 5, wherein the solvent including one or more carbonate or ether group is one or more selected from:
**Carbonates:** 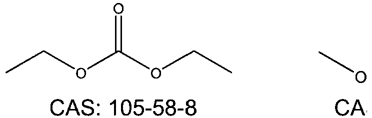 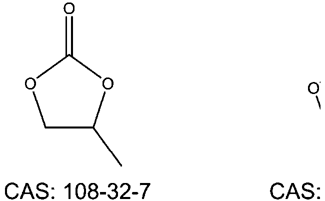 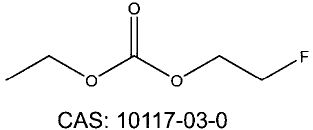 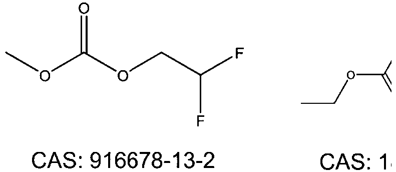
**Ethers:**

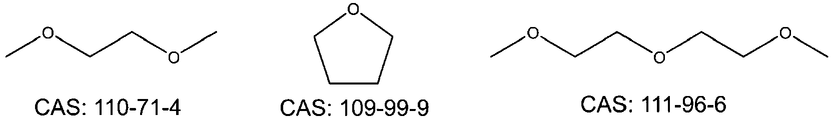

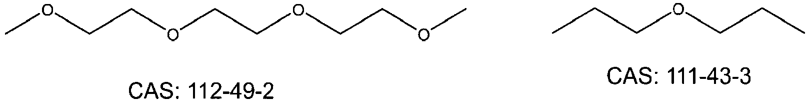

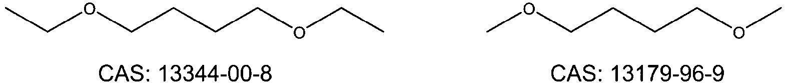

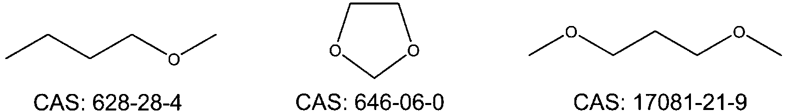

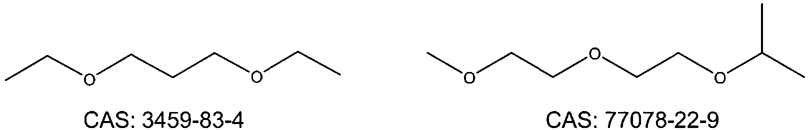

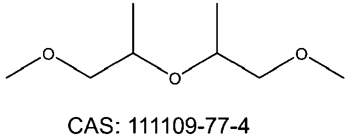

7. The composition according to claim 1, wherein a weight ratio of the fluorinated species is between 30%-80%.

8. The composition according to claim 1, wherein the fluorinated species include one or more fluorinated ether or carbons/ester.

9. The composition according to claim 8, wherein the fluorinated ether or carbons/ester is one or more selected from:
**Fluorinated ethers:** 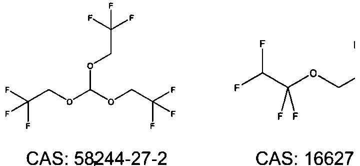 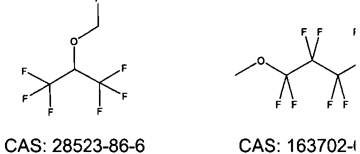 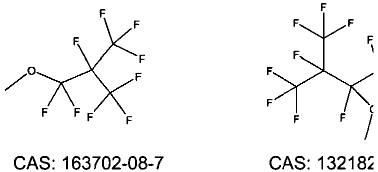 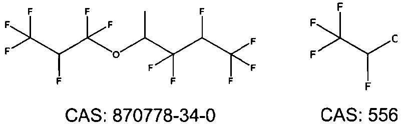 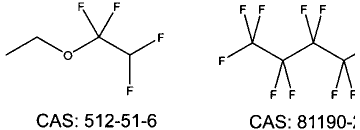 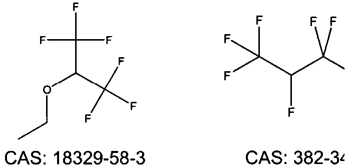
**Fluorinated carbons/esters:**

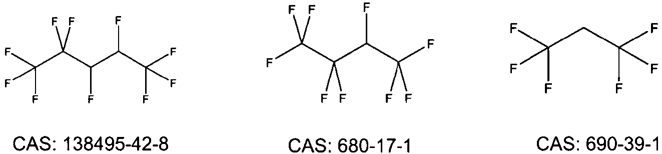

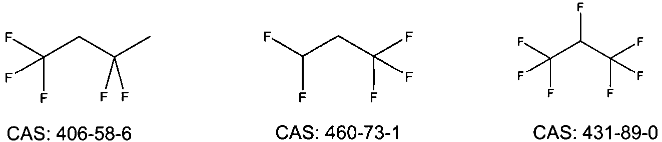

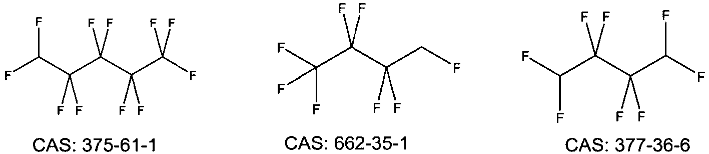

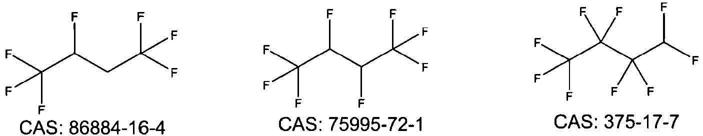

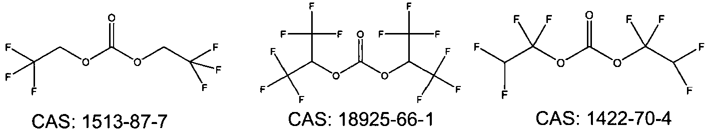

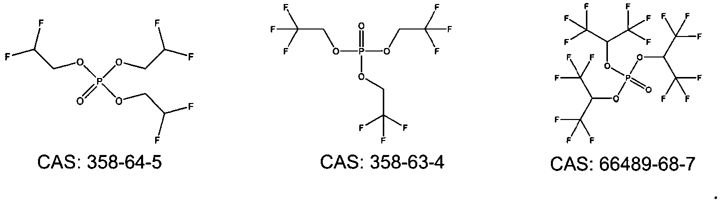

10. The composition according to claim 1, wherein a weight ratio of the additive is less than or equal to10%.

11. The composition according to claim 1, wherein the additive is one or more selected from the group consisting of unsaturated carbonates, unsaturated sulfonates, silicon-based compounds, and lithium salts.

12. The composition according to claim 11, wherein the one or more of unsaturated carbonates, unsaturated sulfonates, silicon-based compounds or lithium salts is selected from:
**Additives:**

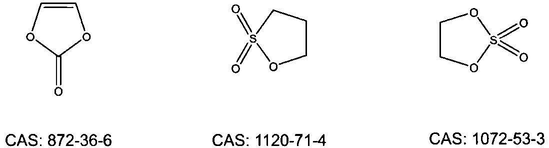

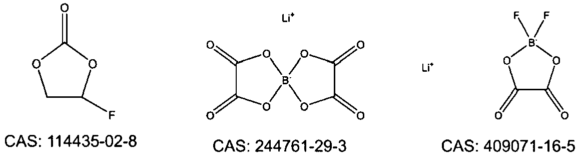

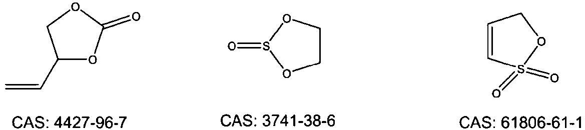

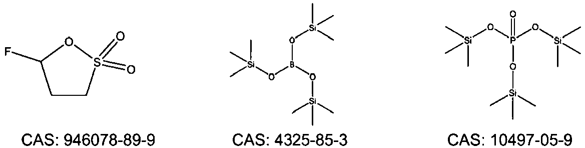

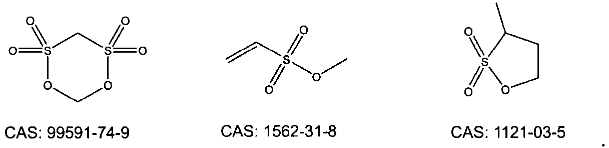

13. A method for preparing an electrolyte for lithium/sodium ion batteries, the method comprising:
dissolving a first predetermined amount of LiPF₆ in a second predetermined amount of DEC solvent to from a clear solution;
adding a third predetermined amount of MPIE, a fourth predetermined amount of FEC, and a fifth predetermined amount of DEC to a sixth predetermined amount of the clear solution to form a mixture; and
homogeneously mixing the mixture.

14. The method of claim 13, wherein the first predetermined amount is 3 mmol.

15. The method of claim 13, wherein the second predetermined amount is 1 ml, and/or wherein the third predetermined amount is 4 g, and/or wherein the fourth predetermined amount is 0.19 ml, and/or wherein the fifth predetermined amount is 0.38 ml, and/or wherein the sixth predetermined amount is 1 ml.
